# EUROPÄISCHE PATENTSCHRIFT

(11) **EP 0 462 127 B1**
(45) Veröffentlichungstag und Bekanntmachung des Hinweises auf die Patenterteilung: **09.06.1993**
(21) Anmeldenummer: 90903779.8
(22) Anmeldetag: 07.03.1990
(51) Int. Cl.: G06K 17/00

(54) **DRUCKVORRICHTUNG MIT WENIGSTENS ZWEI, RÄUMLICH VONEINANDER GETRENNTEN DRUCKSTATIONEN**
PRINTER WITH AT LEAST TWO SPATIALLY SEPARATE PRINTING STATIONS
IMPRIMANTE AVEC AU MOINS DEUX STATIONS D'IMPRESSION SEPAREES

(30) Priorität: 08.03.1989 DE 8902848 U; 31.07.1989 DE 8909248 U
(43) Veröffentlichungstag der Anmeldung: 27.12.1991
(73) Patentinhaber: Siemens Nixdorf Informationssysteme Aktiengesellschaft, 33102 Paderborn (DE)
(72) Erfinder: SCHIMMELPFENNIG, Rolf, D-8000 München 80 (DE); STROHDIEK, Heinz, D-4790 Paderborn (DE)
(74) Vertreter: Fuchs, Franz-Josef, Dr.-Ing.
(86) Internationale Anmeldenummer: DE9000166
(87) Internationale Veröffentlichungsnummer: WO9010917

(56) Entgegenhaltungen:
- DE-A- 2 506 632
- PATENT ABSTRACTS OF JAPAN, BD. 10, Nr. 101 (P-447)(2158), 17.April 1986;& JP-A-60231277

## Beschreibung

Die Erfindung betrifft eine Druckvorrichtung nach dem Merkmalen des Oberbegriffs des Anspruchs 1, wie sie aus der DE-A-2506632 bekannt ist.

Derartige Druckvorrichtungen kommen vorzugsweise für den Einsatz bei Schalterarbeitsplätzen in Betracht, bei denen beispielsweise Formulare, Sparbücher, Schecks, Ausweise, Etiketten oder dergleichen bedruckt und gelesen und darüber hinaus Quittungen, Kassenbons usw. für den Kunden erstellt und/oder gedruckte Journale geführt werden. In Anbetracht des meist knappen Platzangebots am Schalterarbeitsplatz sollen derartige Geräte nur sehr geringe äußere Abmessungen aufweisen. Andererseits werden eine einfache Handhabung sowie eine gute Zugänglichkeit bei der Wartung, z.B. beim Farbbandwechsel gefordert, damit der Betrieb am Schalter möglichst schnell und störungsfrei abgewickelt werden kann.

Angesichts dieser Forderungen kommen Konzepte, bei denen für jede Druckstation ein eigener Druckkopf mit separatem Antrieb und gegebenenfalls noch eine Lesekopf verwendet werden, wegen des erhöhten Kostenaufwands und des durch die Mehrzahl der Aggregate bedingten Platzbedarfs praktisch nicht in Betracht.

Es ist deshalb bereits bekannt (vgl. DE A 30 39 124), Druckkopf und Lesekopf auf einem gemeinsamen Zwischenträger nebeneinander anzuordnen und beide Aggregate gemeinsam anzutreiben. Diese Anordnung erfordert sowohl eine komplizierte Farbbandführung für den Druckkopf, damit das Lesefenster des unmittelbar daneben angeordneten Lesekopfes nicht verdeckt wird, als auch einen erhöhten Platzbedarf in der Breite, da zum Lesen und Schreiben der vollen Formatbreite auf der einen Seite der Lesekopf und auf der anderen Seite der Druckkopf über das Format hinausgeführt werden muß, sofern man nicht einen Verlust an Formatbreite in Kauf nimmt und auf die beiden Randstreifen beim Lesen und Schreiben verzichtet. Der Aufwand ist auch hier noch beträchtlich, weil für eine weitere Druckstation nach wie vor ein eigener Druckkopf einschließlich Antrieb und Ansteuerung vorgesehen werden muß.

Eine andere bekannte Vorrichtung sieht deshalb bereits ein schwenkbares Tragelement vor, an welchem nur noch ein einziger Druckkopf und ein senkrecht zum Druckkopf angeordneter Lesekopf befestigt sind. Die Schwenkachse des Tragelementantriebs verläuft dabei so, daß der Druckkopf quer zur Zeilenrichtung zwischen zwei Druckstationen vor- und zurückgeschwenkt werden kann. Auch diese schwenkbare Anordnung erfordert einen hohen Platzbedarf, weil in einer Schwenkstellung der Lesekopf nach vorne steht und dort lediglich eine Parkposition einnimmt, während in der anderen Schwenkstellung der Druckkopf nach hinten entsprechend weit in das Gerät hineinreicht. Auch in der Breite kann unter Umständen ein weiterer Platzaufwand erforderlich werden, wenn der Druckkopf zum Schwenken seitlich außerhalb des Rollenbereichs der Vorschubeinrichtung positioniert werden muß.

Der vorliegenden Erfindung liegt nun die Aufgabe zugrunde, eine Druckvorrichtung der eingangs genannten Art so zu verbessern, daß die auf einem Schwenkantrieb befestigten Druck- und Leseaggregate an den einzelnen Druckstationen möglichst vielseitig eingesetzt werden können, daß der Platzbedarf für diese Anordnung möglichst gering gehalten werden kann und daß darüberhinaus das Gerät einfach gehandhabt und gewartet werden kann.

Die Lösung dieser Aufgabe ergibt sich erfindungsgemäß durch die kennzeichnenden Merkmale des Anspruchs 1. Eine derartige Vorrichtung erfordert insgesamt einen sehr geringen Platzbedarf und zwar sowohl in der Breite, da die Schwenkbewegung in der Mitte des Druckfeldes in Richtung der Druckzeile, d.h. quer zur Vorschubrichtung der Druckvorlage erfolgt, als auch in der Tiefe, weil die einzelnen Funktionseinheiten durch den Schwenkvorgang lediglich ihren Arbeitsplatz tauschen und deshalb keine der Funktionseinheiten zwischenzeitlich auf einer platzraubenden Parkposition verweilt.

Vorteilhafte Weiterbildungen der Erfindung sind in den Unteransprüchen angegeben.

So ist u.a. vorgesehen, daß die einzelnen Funktionseinheiten, d.h. der Druckkopf und gegebenenfalls ein Lesekopf, ein Schreib-/Lesekopf oder ein als Rollenmesser ausgebildetes Schneidemesser so auf einem Schwenkteller angeordnet werden, daß wenigstens zwei dieser Funktionseinheiten auf je ein Druckwiderlager eines Arbeitsbereiches ausgerichtet sind.

Die beiden Funktionseinheiten sind mit ihren Achsen auf dem Schwenkteller zueinander z.B. in einem stumpfen Winkel in Richtung auf die Druckwiderlager angeordnet, so daß sie auch beim Schwenken keinen über die üblichen Konturen eines Druckwerkes hinausgehenden Raum benötigen. In besonderen Anwendungen kann eine rechtwinkelige oder gestreckte Lage der Funktionseinheiten zueinander vorgesehen sein; dies richtet sich nach den gewünschten Druckebenen. Ist eine Schneidevorrichtung vorgesehen, so ist diese vorteilhaft in weiteren Arbeitsstellungen des Schwenktellers angebracht. Das Rollenmesser findet dann jeweils eine Kante eines Druckbalkens als Gegenschneidkante.

Die Funktionseinheiten sind vorteilhaft auf dem Schwenkteller in Axialschlitten axialverschieblich gelagert und in Achsrichtung verstellbar, so daß sie zum Passierenlassen von einzuführenden Belegen jeweils vom Druckwiderlager und Beleg gesteuert abzuheben sind. Beide Axialantriebe sind vorteilhaft von einem steuerbaren Motor zu betätigen. In seiner Druckstellung stützt sich der Druckkopf mittels einer Distanzrolle kraftschlüssig auf dem zu bedruckenden Beleg ab, so daß Toleranzen in der Kopflagerung zum Druckwiderlager und die Belegdicke keinen Einfluß auf den effektiven Nadelhub, der für die Druckqualität bedeutsam ist, haben. Sofern eine Kopfhubsteuerung vorgesehen ist, ist es vorteilhaft möglich, jeweils vor dem Schwenken der Köpfe diese in die abgehobene Stellung zu verbringen, da dann der benötigte Schwenkbereich geringer ist, was zu einer konstruktiven Verkleinerung des umgebenden Gehäuses führt.

Die Antriebe zum Schwenken für das Farbband und/oder den Kopfhub lassen sich chassisseitig montieren. Sie sind mittels über die Schlittenbreite geführte Antriebsmittel, wie Seile oder Riemen, mit dem anzutreibenden Schwenkteller, dem Farbbandcassetten-Antrieb oder der Kopfhubvorrichtung verbunden.

Als weitere Alternative für den Schwenkantrieb, den Farbbandantrieb und/oder den Kopf-Hubantrieb können auch gesteuerte Kupplungen zwischen chassisfesten Teilen, z.B. dem Druckbalken oder dem Schlitten oder einem Seil oder Riemen, und den schlittenfesten Teilen angeordnet sein, die jeweils eingekuppelt eine Übertragung der Schlittenbewegung auf den zugehörigen Antrieb bewirken.

In einer bevorzugten Ausführungsform sind der Axialantriebsmotor und ein Farbbandantriebsmotor vorteilhaft auf dem Schwenkteller angeordnet, und auch der Schwenkmotor ist vorteilhaft auf dem Schlitten montiert, so daß keine mechanische Getriebeglieder auf den Schlitten geführt sind und eine kompakte Kopfbaugruppe mit dem Schlitten gebildet ist. Diese Kopfbaugruppe läßt sich in Druckvorrichtungen verschiedener Breite, die mit unterschiedlichen Belegfördervorrichtungen bestückt sein können, einbauen.

Eine bevorzugte Anordnung der Druckbereiche enthält eine untenliegende Flachbettführung, der eine Belegzuführauflage außerhalb des Gehäuses vorgelagert ist, so daß dort Kontokarten, Sparbücher, Etiketten usw. einzuführen sind und gelesen und bedruckt werden können. Ein weiteres oberes Druckwiderlager dient dem Bedrucken von zwei Bahnen, wobei diese zweckmäßig in verschiedener Breite gehalten sind, wobei die eine Bahn zur Förderung eines Journals, das innerhalb des Druckgehäuses wieder aufgewickelt wird, und die schmalere andere Bahn zur Förderung von Quittungen dient, die aus einem Gehäuseschlitz ausgeführt werden.

Um eine gute Zugänglichkeit der Druckbahnen für das Beschicken mit neuem Journal- oder Quittungspapier zu bieten, ist das obere Druckwiderlager, das als Druckbalken ausgebildet ist, an seinen Seiten schwenkbar gelagert. Weiterhin ist eine Eingriffsmöglichkeit in die Flachbettförderbahn dadurch gegeben, daß die oberen Leitbleche und die Andruckrollen gemeinsam hochschwenkbar gelagert sind, wenn die Kopfbaugruppe zur Seite gefahren ist, so daß gegebenenfalls störende Belegteile leicht zu beseitigen sind.

Eine besonders gute Zugänglichkeit der Flachbettförderbahn ergibt sich durch eine schwenkbare Lagerung der Schlittenbahn in Seitenwangen, die am Chassis durch eine Verriegelung festlegbar sind. Etwaige Toleranzen der Schlittenbahn zu den Druckwiderlagern wird durch die Axialverschieblichkeit der Köpfe ausgeglichen.

Ausführungsbeispiele der Erfindung werden im folgenden anhand der Zeichnung näher erläutert. Dabei zeigen:
- FIG 1, 2: Das Prinzip einer erfindungsgemäßen Druckvorrichtung in Seiten- und Vorderansicht,
- FIG 3, 4: zwei weitere Ausführungsbeispiele, jeweils in Seitenansicht,
- FIG 5: eine Seitenansicht einer erfindungsgemäßen Druckvorrichtung bei abgenommener Gehäuseseitenwand, schematisiert,
- FIG 6: einen Schwenkantrieb mit einem Schwenkteller sowie einen Axialschlitten in Seitenansicht,
- FIG 7: den Schwenkteller mit dem Axialantrieb in Richtung der Schwenkachse gesehen,
- FIG 8: den Schwenkteller in Richtung der Lesekopfachse gesehen,
- FIG 9: den Grundriß der Druckvorrichtung schematisch bei abgenommenem Gehäusedeckel, teilweise demontiert,
- FIG 10: eine Explosionsdarstellung des Gehäuses der Druckvorrichtung.

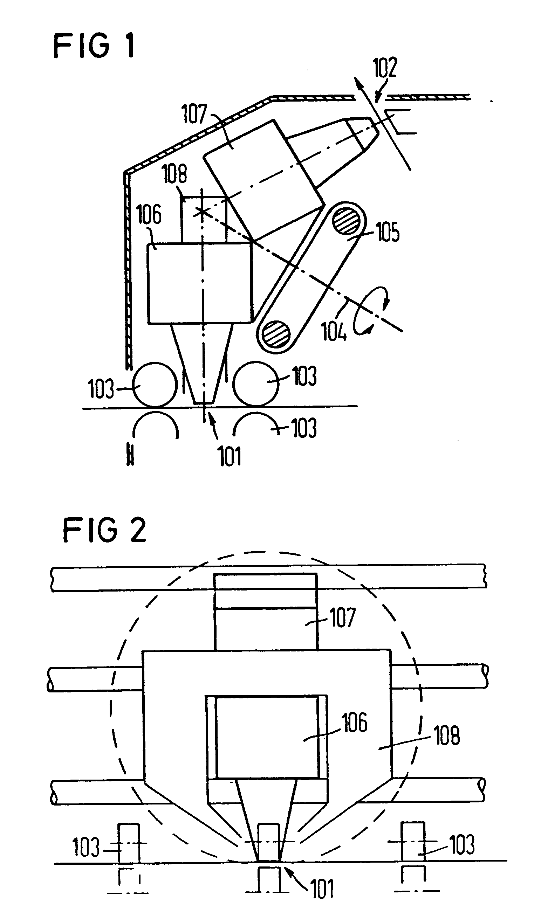

Die FIG 1 und 2 zeigen eine Druckvorrichtung mit zwei Druckstationen 101, 102, von denen eine als Flachbettdrucker mit bidirektionaler Vorschubeinrichtung (siehe die Vorschubrollen 103) und die andere als Journaldrucker ausgebildet ist. Im Raum zwischen den beiden Druckstationen 101, 102 ist ein um eine schrägstehende Schwenkachse 104 schwenkbarer Träger 105 vorgesehen, an dem ein Druckkopf 106 und ein OCR-Lesekopf 107 befestigt sind. Der senkrecht über der Flachbett-Druckstation 101 angeordnete Druckkopf 106 und der OCR-Lesekopf 107 stehen im stumpfen Winkel zueinander, wobei die Schwenkachse 104 in der dazwischenliegenden Winkelhalbierenden verläuft. Bezogen auf die senkrecht zur Schwenkachse verlaufende Ebene sind die Funktionseinheiten Druckkopf 106 und Lesekopf 107 in einem gleichgroßen spitzen Winkel ≧ 45° angeordnet. Aufgrund dieser Anordnung werden die Funktionseinheiten jeweils in Druckzeilenrichtung, d.h. quer zur jeweiligen Vorschubrichtung im Bedarfsfall zwischen den einzelnen Druckstationen hin und her geschwenkt. Die dem Druckkopf 106 zugeordnete Farbbandkassette 108 braucht während des Schwenkvorgangs nicht entfernt zu werden, sondern schwenkt zusammen mit dem Druckkopf 106 in die jeweils andere Druckposition.

Je nach Bedarf kann die dargestellte Vorrichtung hinsichtlich der Funktionseinheiten unterschiedlich bestückt werden. So können z.B. ausschließlich Druckköpfe verwendet werden, wobei gegebenenfalls Druckköpfe unterschiedlicher Technik (Nadel, Tinte, Thermodruck usw.) eingesetzt werden können. Am Lesekopf kann zusätzlich ein Strichcodeleser angebracht werden. Es besteht gegebenenfalls auch die Möglichkeit, zwischen zwei einander gegenüberstehenden Druckköpfen zusätzlich einen Lesekopf vorzusehen.

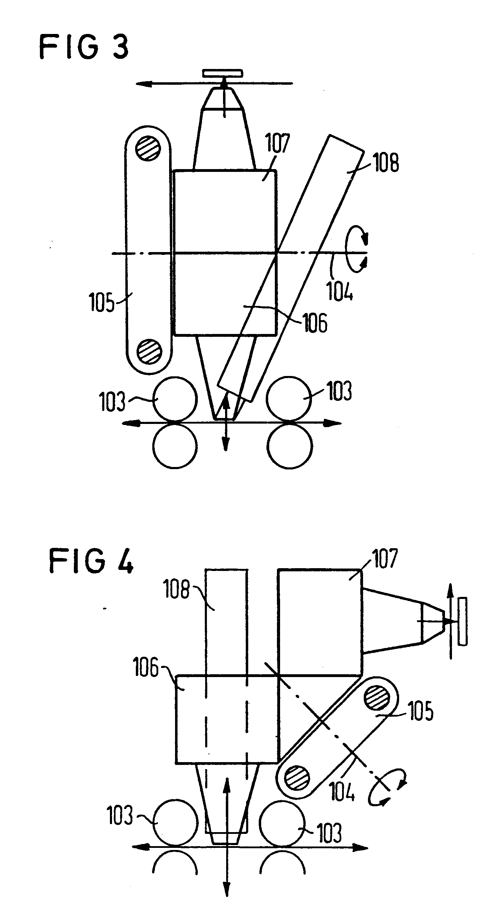

Die FIG 3 zeigt eine Ausführungsform, bei der die Funktionseinheiten in einer senkrecht zur Schwenkachse verlaufenden Schwenkebene angeordnet sind, wobei die Schwenkachse parallel zu den beiden Vorschubeinrichtungen der jeweiligen Druckstationen verläuft.

Bei der Ausführungsform nach FIG 4, bei der wie bei FIG 3 die Bezugszeichen aus den FIG 1 und 2 verwendet werden, sind die beiden Funktionseinheiten im 45°-Winkel zu der senkrecht zur Drehachse verlaufenden Ebene angeordnet, so daß die Funktionseinheiten im rechten Winkel zueinander stehen. Bei dieser Anordnung wird die Druckvorlage für die Druckstation 102 senkrecht nach oben herausgeführt.

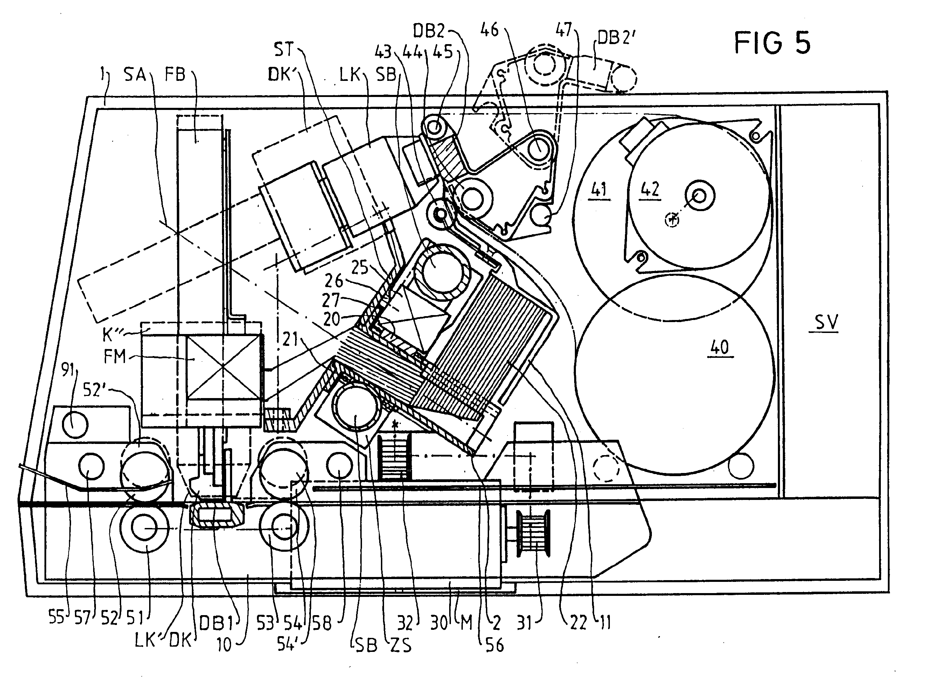

FIG 5 zeigt eine Druckvorrichtung vereinfacht im Seitenriß bei entfernter Seitenwand. Ein Druckkopf DK und ein Lesekopf LK als weitere Funktionseinheit sind auf einem Schwenkteller ST um die Schwenkachse SA schwenkbar angeordnet. Der Schwenkteller ST steckt mit einem hohlzylindrischen Ansatz 2 in einer Buchse 20 mit Kugellagern 21, die auf einem Schlitten ZS montiert ist. Dieser Schlitten ZS ist auf den als Schlittenbahn SB dienenden Stangen in Zeilenrichtung verschieblich gelagert. Durch die Buchse 20 und den hohlzylindrischen Ansatz 2 ist ein Kabel 22 biegsam und um 180° verdrehbar hindurchgeführt, über das die Magnete des Nadeldruckkopfes DK, der Lesekopf LK sowie ein Farbbandantriebsmotor FM eines Farbbandes FB und ein weiterer Motor elektrisch versorgt sind. Das Kabel 22 ist vom Schlitten ZS aus als Flachbandschleppkabel in einem gehäusefesten Kabelkanal 11 in bekannter Weise weitergeführt und mit einer elektronischen Steuervorrichtung SV verbunden. In geschwenkter Lage ist der Druckkopf DK' und der Lesekopf LK' gestrichelt dargestellt, so daß zu erkennen ist, daß einschließlich des Farbbandes praktisch kein zusätzlicher Platzbedarf für einen Schwenkbereich der Köpfe benötigt wird.

Im Schlitten ZS ist ein Schwenkmotor 25 angeordnet, der mit einem Ritzel 26 in einem Zahnkranz 27 des hohlzylindrischen Ansatzes 2 kämmt. Der Schlittenantrieb erfolgt mit einem chassisseitig gelagerten Schlittenmotor 30 über einen Riementrieb 31 und einen Zahnriementrieb 32, an dem der Schlitten ZS befestigt ist.

Im Gehäuse 1 ist ein Chassis 10 eingesetzt, das die Schlittenbahn SB, den Schlittenantrieb 30 - 32, zwei als Druckwiderlager dienende Druckbalken DB1, DB2, ferner Journalpapierrollen 40, 41 und deren Förderansatz und Wickelantrieb 42 sowie die Belegführungen aufnimmt und mit den Seitenwänden trägt. Im rückwärtigen Bereich ist die Steuervorrichtung SV angeordnet. Das Journal ist von der Vorratsrolle 40 durch ein federbelastetes Förderrollenpaar 43, 44 und über eine Umlenkrolle 45 zur Journalwickelrolle 41 geführt. Die Umlenk- und die Förderrolle 44, 45 sowie der Druckbalken DB2 sind als Baugruppen an Seitenwangen um eine Schwenkachse 46 in die gestrichelt gezeichnete Lage des Druckbalkens DB2' herausschwenkbar, so daß das Journalpapier einfach einzulegen ist. Heruntergeschwenkt ist diese Baugruppe an einem Widerlager 47 abgestützt und verriegelt.

Im vorderen unteren Gehäusebereich ist eine Flachbettbelegführung 51 - 56 angeordnet, die aus einem als Einführtrichter ausgebildeten Belegleitblech 55, einem einen Belegschacht bildenden weiteren Belegleitblech 56 und federbelasteten Führungsrollenpaaren 51, 52, 53, 54 besteht, die jeweils vor und hinter dem Druckbalken DB1 plaziert sind. Gleichzeitig sind der Druckkopf DK und der Lesekopf LK in eine angehobene Kopfposition K'' axial verschiebbar.

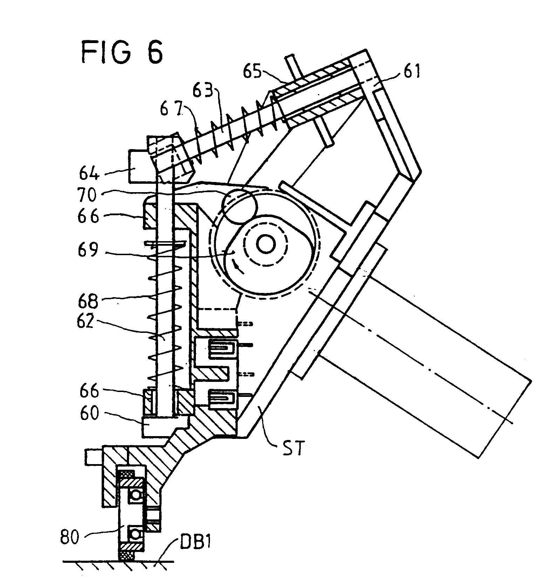

FIG 6 zeigt Einzelheiten des Schwenktellers ST bei abgenommenen Köpfen. An ihm befinden sich zwei abgewinkelte Haltearmpaare 60, 61, in denen paarweise Führungsbolzen 62, 63 gehalten sind, die in einer Traverse 64 andernends aufgenommen sind. Auf den Führungsbolzen 62, 63 ist jeweils ein in Richtung der Kopfachsen ausgerichteter Axialschlitten 65, 66 für den nicht dargestellten Lesekopf und Druckkopf axialverschieblich ge führt. Die Axialschlitten 65, 66 sind durch Federn 67, 68 jeweils in eine Richtung belastet und in die Gegenrichtung dazu über jeweils einen Mitnehmer 70 an je einer Kurvenscheibe 69 abgestützt.

Der den Druckkopf tragende Axialschlitten 66 stützt sich mit einer Distanzrolle 80 an dem Druckbalken DB1 oder dem daraufliegenden Beleg ab, wenn er von der Kurvenscheibe 69 freigegeben ist.

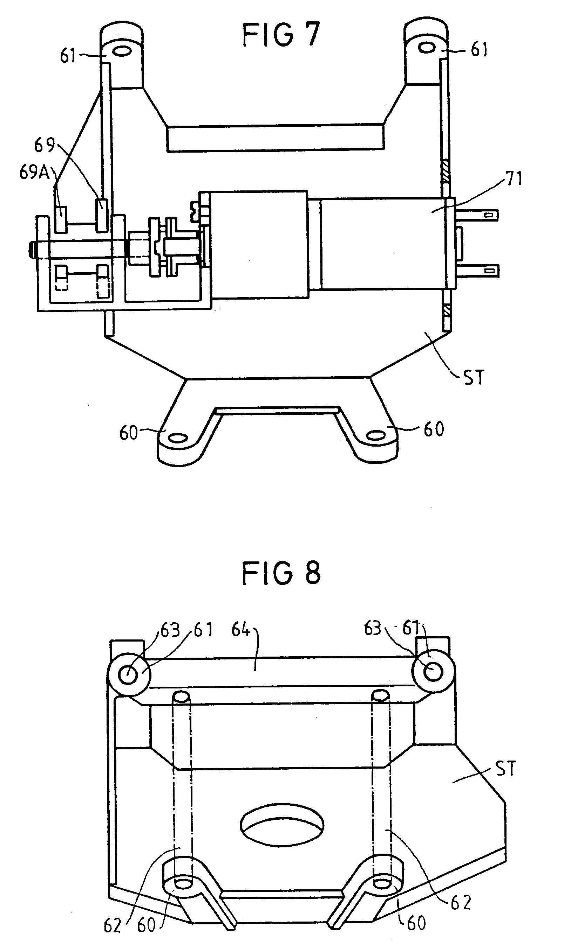

FIG 7 zeigt eine Aufsicht auf den Schwenkteller ST bei ausgebauten Köpfen und ausgebauten Axialschlitten. Auf ihm ist ein Axialhubmotor 71 montiert, der endseitig zwei Kurvenscheiben 69, 69A trägt, auf denen sich jeweils einer der Mitnehmer der beiden Axialschlitten abstützt. Der Axialhubmotor 71 ist quer zu den Haltearmpaaren 60, 61 platzsparend angeordnet.

FIG 8 zeigt eine Ansicht des Schwenktellers ST schräg von unten ohne den Axialhubmotor und mit in die Haltearmpaare 60, 61 paarweise eingesetzten Führungsbolzen 62, 63, die in der Traverse 64 andernends gehalten sind.

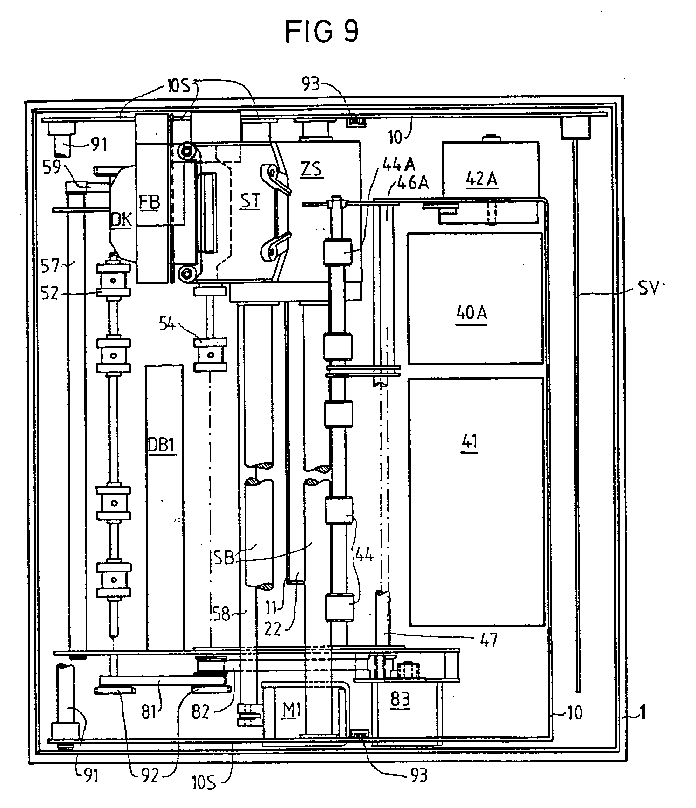

FIG 9 zeigt eine Aufsicht auf die Druckvorrichtung bei geöffneter Oberseite. Im hinteren Bereich des Gehäuses 1 ist die Steuervorrichtung SV untergebracht. Davor befindet sich das Chassis 10, das aus mehreren parallelen Seitenwänden mittels Querstangen zusammengesetzt ist. Der obere Druckbalken und der Lesekopf sind ausgebaut, so daß die Schlittenbahn SB, der Schlitten ZS und der Schwenkteller ST mit dem Druckkopf DK und dem Farbband FB zu sehen sind. Parallel zu dem unteren Druckbalken DB1 sind die Andruckrollen 52, 54 zu erkennen, die teilweise herausgebrochen gezeichnet sind. Im seitlichen Chassisbereich sind die Antriebe 81, 82 der untengelegenen Antriebsrollen der Flachbettführung sowie deren Beleg-Antriebsmotor 83 zu sehen.

Ein erster Elektromagnet M1 wirkt auf die Schwenkachse 58 der hinteren Andruckrollen 54 des Flachbettförderers und ein weiterer nicht sichtbarer Elektromagnet wirkt über eine Getriebeverbindung 59 auf die Schwenkachse 57 der vorderen Andruckrollen 52. Der Andruck der Rollen durch die Magnete M1 wird in bekannter Weise mittels Lichtschranken gesteuert, die im Belegdurchlaufbereich nahe der Röllenachsen angeordnet sind. Im Stirnbereich der Achsen der Andruckrollen 51, 52; 53, 54 sind Zahnradpaare 92 angeordnet, die im angedrückten Zustand ineinander kämmen und die Rollenpaare jeweils beidseitig des Beleges synchron antreiben.

Zwecks guter Zugänglichkeit der Belegbahn im Wartungsfall lassen sich die oberen Rollenachsen zusammen mit den Führungsblechen, durch die die Rollen 52, 54 in die Belegbahn hindurchragen, hochschwenken. Darüberhinaus sind für die gute Zugänglichkeit die Wellen der Schlittenbahn SB in Seitenwangen 10S des Chassis befestigt, die um die frontseitige Achse 91 schwenkbar gelagert sind und jeweils mit einer Riegelvorrichtung 93 mit dem Chassis 10 verbindbar und verrastbar sind. An den Seitenwangen 10S ist auch der Schlittenantrieb M, (FIG 1), befestigt, so daß die gesamte Schlittenvorrichtung einschließlich der Schwenkvorrichtung mit den Knöpfen herausschwenkbar ist.

Im mittleren Gehäusebereich liegen eine Journalpapierrolle 41 und eine Bon- oder Etikettenvorratsrolle 40A. Neben der Vorratsrolle ist der Fördermotor 42A an der Chassiswand befestigt. Dieser treibt ein Rollenpaar, bestehend aus nicht gezeigten Antriebsrollen und den zugehörigen Andruckrollen 44A. Das Rollenpaar ist ebenso wie die Andruckrollen 44 des Journaltransportes um eine Schwenkachse 46A schwenkbar und an einem Widerlager 47 verriegelbar.

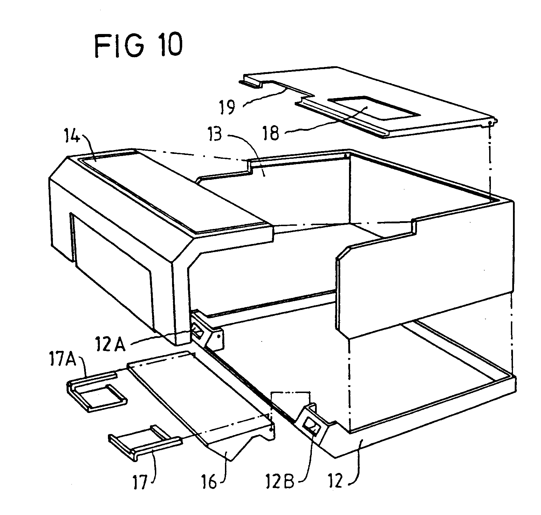

FIG 10 ist eine Explosionszeichnung des Gehäuses, das aus einer Bodenwanne 12, einem U-förmigen Seitenrahmen 13, einer winkelförmigen Frontklappe 14, einer Deckklappe 15 und einer frontseitigen Belegzuführauflage 16 mit klammerförmigen, einstellbaren seitlichen Beleganschlägen 17, 17A besteht. Sämtliche Teile sind miteinander lösbar verrastet, so daß eine freie Zugänglichkeit aller Baugruppen im Wartungsfall gegeben ist. In der Deckklappe 15 ist ein Sichtfenster 18 für den Journaldruck und ein Bonentnahmeschlitz 19 eingearbeitet. In der Bodenwanne 12 sind frontseitig seitlich Durchbrüche 12A, 12B für Betriebsschalter und Anzeigen eingearbeitet.

## Patentansprüche

1. Druckvorrichtung mit wenigstens zwei, räumlich voneinander getrennten Arbeitsbereichen, die jeweils separate Vorschubeinrichtungen für die dem jeweiligen Arbeitsbereich zugeordnete Druckvorlage aufweisen, unter Verwendung wenigstens eines Druckkopfes (106) und wenigstens einer weiteren gleichartigen oder unterschiedlichen Funktionseinheit (107), die an einem gemeinsamen Träger (105) befestigt und mittels eines Schlittens (ZS) jeweils parallel in Zeilenrichtung verschiebbar gelagert sowie mittels eines gemeinsamen Schwenkantriebes zwischen den einzelnen Arbeitsbereichen (101,102) schwenkbar angeordnet sind,
**gekennzeichnet durch** ein senkrecht zur
Zeilenrichtung verlaufende Schwenkachse (104) des Schwenkantriebes und durch eine derartige Anordnung der einzelnen Funktionseinheiten (106, 107) am Träger (105), daß die Funktionseinheiten (106, 107) jeweils in zeilenrichtung und quer zur Vorschubrichtung aus dem jeweiligen Arbeitsbereich (101, 102) heraus bzw, in diesen hineinschwenkbar sind.

2. Druckvorrichtung nach Anspruch 1,
**dadurch gekennzeichnet,** daß die Funktionseinheiten auf dem gemeinsamen Träger (105) so angeordnet sind, daß sie in, bezogen auf die senkrecht zur Schwenkachse (104) verlaufenden Ebene, gleichgroßen Winkeln im Bereich 45° ≦ α ≦ 90° angeordnet sind.

3. Druckvorrichtung nach Anspruch 1 oder 2,
**dadurch gekennzeichnet,** daß außer dem Druckkopf (DK, DK') weitere Funktionseinheiten so angeordnet sind, daß gleichzeitig mindestens zwei Funktionseinheiten wechselseitig in jeweils zugeordnete Arbeitsbereiche (DB1, DB2) verschwenkbar sind.

4. Druckvorrichtung nach Anspruch 3,
**dadurch gekennzeichnet,** daß als weitere Funktionseinheit(en) wahlweise ein weiterer Druckkopf, ein Sensorkopf, ein optischer Lesekopf (LK), ein magnetischer Schreib-Lesekopf oder ein Schneidmesser vorgesehen ist.

5. Druckvorrichtung nach einem der vorstehenden Ansprüche, **dadurch gekennzeichnet,** daß der Schwenkantrieb aus einem Schwenkteller (ST) mit einem hohlzylindrischen Ansatz (2) besteht, der in einer auf dem Schlitten (ZS) vorgesehenen Buchse (20) verschwenkbar gelagert ist, und daß auf dem Schlitten ein Schwenkmotor (25) befestigt ist, der über ein Ritzel (26) mit einem zahnkranz (27) an den Schwenkteller (ST) mechanisch gekoppelt ist.

6. Druckvorrichtung nach einem der vorstehenden Ansprüche, **dadurch gekennzeichnet,** daß der Druckkopf (DK) und/oder weitere Funktionseinheiten mittels steuerbarer Hubvorrichtungen, bezogen auf den Abstand zum jeweiligen Arbeitsbereich axialverschieblich gelagert sind.

7. Druckvorrichtung nach Anspruch 6,
**dadurch gekennzeichnet,** daß die Hubvorrichtung aus einem Axialhubmotor (71) besteht, der über Kurvenscheiben (69, 69A) eine Höhenverstellung des Druckkopfes (DK) und/oder der weiteren Funktionseinheiten bewirkt.

8. Druckvorrichtung nach einem der vorstehenden Ansprüche, **dadurch gekennzeichnet,** daß ein Arbeitsbereich als Flachbettbeleg-Druckvorrichtung (51 - 59) ausgebildet ist und daß in der Flachbett-Belegbahn ein als Druckwiderlager dienender Druckbalken und beidseitig des Druckbalkens (DB1) federbelastete Rollenpaare (51, 52; 53, 54) angeordnet sind.

9. Druckvorrichtung nach Anspruch 8,
**dadurch gekennzeichnet,** daß jeweils mindestens die unteren Rollen (51, 53) eines Rollenpaares mit einem steuerbaren Belegfördermotor (83) gekoppelt sind und daß die jeweils oberen Rollen (52, 54) nach oben herausschwenkbar gelagert sind.

## Claims

1. A printing device having at least two working areas which are separated spatially from one another and each have separate feed devices for the original assigned to the respective working area, using at least one printing head (106) and at least one further functional unit (107) of the same kind or different, which functional units are attached to a common carrier (105) and displaceably mounted by means of a carriage (ZS) in each case in parallel in the direction of the lines and are arranged so as to swivel between the individual working areas (101,102) by means of a common swivel drive, which comprises a swivel axis (104) running perpendicularly to the direction of the lines, of the swivel drive and an arrangement of the individual functional units (106, 107) on the carrier (105) such that the functional units (106, 107) can be swiveled in each case in the direction of the lines and perpendicularly to the feed direction out of and into the respective working area (101, 102).

2. The printing device as claimed in claim 1, wherein the functional units are arranged on the common carrier (105) in such a way that, with respect to the plane running perpendicularly to the swivel axis(104), they are arranged at angles of the same size in the region of 45° ≦ α ≦ 90°.

3. The printing device as claimed in claim 1, wherein, apart from the printing head (DK, DK'), further functional units are arranged in such a way that at the same time at least two functional units can be swiveled interchangeably into respectively assigned working areas (DB1, DB2).

4. The printing device as claimed in claim 1, wherein a further printing head, a sensor head, an optical reading head (LK), a magnetic writing-reading head or a cutting blade is optionally provided as a further functional unit or units.

5. The printing device as claimed in claim 1, wherein the swivel drive consists of a swivel plate (ST) with a hollow-cylindrical projection (2) which is swivelably mounted in a bushing (20) provided on the carriage (ZS), and a swivel motor (25) is attached to the carriage and coupled mechanically via a pinion (26) to a gearwheel (27) on the swivel plate (ST).

6. The printing device as claimed in claim 1, wherein the printing head (DK) and/or further functional units are mounted axially displaceably, with respect to the spacing to the respective working area, by means of controllable lifting devices.

7. The printing device as claimed in claim 6, wherein the lifting device consists of an axial lifting motor (71) which, by means of cam plates (69, 69A) brings about a height adjustment of the printing head (DK) and/or of the further functional units.

8. The printing device as claimed in claim 1, wherein a working area is constructed as a flatbed document printing device (51 - 59) and in the flatbed document track a pressure bar serving as a printing block and spring-loaded roller pairs (51, 52; 53, 54) are arranged on both sides of the pressure bar (DB1).

9. The printing device as claimed in claim 8, wherein in each case at least the lower rollers (51, 53) of a roller pair are coupled to a controllable document conveyor motor (83) and the respective upper rollers (52, 54) are mounted so as to swivel out upwardly.

## Revendications

1. Dispositif d'impression comportant au moins deux zones de travail séparées spatialement l'une de l'autre et qui possèdent des dispositifs d'avance respectivement séparés pour le modèle d'impression associé à la zone de travail respective, et utilisant au moins une tête d'impression (106) et au moins une unité fonctionnelle suplémentaire, identique ou différente (107), qui sont fixées à un support commun (105) et sont respectivement supportées de manière à être déplaçables parallèlement dans la direction des lignes au moyen d'un chariot (ZS) et sont disposées de manière à être déplacées par basculemnt entre les différentes zones de travail (101,102) au moyen d'un dispositif commun d'entraînement basculant,
caractérisé par le fait que l'axe de basculement ou dépivotement (104) du dispositif d'entraînement pivotant est perpendiculaire à la direction des lignes et que la disposition des différentes unités fonctionnelles (106,107) sur le support (105) est telle que les unités fonctionnelles (106,107) peuvent être dégagées ou être amenées par pivotement hors de ou dans la zone de travail respective (101,102), respectivement dans la direction des lignes et transversalement par rapport à la direction d'avance.

2. Dispositif d'impression suivant la revendication 1, caractérisé par le fait que les unités fonctionnelles sont disposées sur le support commun (105) sous des angles identiques, dans la plage 45° ≦ α ≦ 90°, par rapport au plan perpendiculaire à l'axe de pivotement (104).

3. dispositif d'impression suivant la revendication 1 ou 2, caractérisé par le fait qu'en plus de la tête d'impression (DK, DK'), d'autres unités fonctionnelles sont disposées de telle sorte que simultanément au moins deux unités fonctionnelles peuvent être amenées par pivotement alternativement dans des zones de travail respectivement associées (DB1, DB2).

4. Dispositif d'impression suivant la revendication 3, caractérisé par le fait qu'il est prévu, comme autre(s) unité(s) fonctionnelle(s), au choix une autre tête d'impression, une tête de capteur, une tête de lecture optique (LK), une tête magnétique d'enregistrement-lecture ou un couteau.

5. Dispositif d'impression suivant l'une des revendications précédentes, caractérisé par le fait que le dispositif d'entraînement pivotant est constitué par un plateau pivotant (ST) comportant un embout saillant, cylindrique et creux (2), qui est monté de manière à pouvoir pivoter dans une douille prévue sur le chariot (ZS), et que sur le chariot est fixé un moteur de pivotement (25), qui est accouplé mécaniquement, par l'intermédiaire d'un pignon (26), à une couronne dentée (27) montée sur le plateau pivotant (ST).

6. Dispositif d'impression suivant l'une des revendications précédentes, caractérisé par le fait que la tête d'impression (DK) et/ou d'autre unités fonctionnelles sont montées de manière à être déplaçables axialement, à distance de la zone de travail respective, au moyen de dispositifs de levage commandables.

7. Dispositif d'impression suivant la revendication 6, caractérisé par le fait que le dispositif de levage est constitué par un moteur de déplacement axial (71), qui réalise, par l'intermédiaire de disques à cames (69, 69A), un réglage en hauteur de la tête d'impression (DK) et/ou des autre unités fonctionnelles.

8. Dispositif d'impression suivant l'une des revendications précédentes, caractérisé par le fait qu'une zone de travail est réalisé sous la forme d'un dispositif d'impression à plat de documents (51 - 59), et que dans la voie plate de déplacement des documents sont disposés une barre de serrage utilisée comme butée d'impression et, des deux côtés de la barre de serrage (DB1), des couples de rouleaux (51, 52; 53, 54) chargés par des ressorts.

9. Dispositif d'impression suivant la revendication 8, caractérisé par le fait que respectivement au moins les rouleaux inférieurs (51, 53) d'un couple de rouleaux sont accouplés à un moteur, commandable (83), d'entraînement des documents et que les rouleaux supérieurs respectifs (52, 54) sont montés de manière à pouvoir être relevés par pivotement.
